# EUROPÄISCHE PATENTSCHRIFT

(11) **EP 2 781 148 B1**
(45) Veröffentlichungstag und Bekanntmachung des Hinweises auf die Patenterteilung: **22.11.2017**
(21) Anmeldenummer: 14001021.6
(22) Anmeldetag: 20.03.2014
(51) Int. Cl.: A01D 43/08

(54) **Mäh- und Einzugseinrichtung zum Schneiden und Abfördern von stängeligem Erntegut**
Mowing and intake device for cutting and removing stalk crops
Dispositif de tonte et d'insertion destiné à couper et enlever des produits récoltés en branche

(30) Priorität: 21.03.2013 DE 102013004858
(43) Veröffentlichungstag der Anmeldung: 24.09.2014
(73) Patentinhaber: Carl Geringhoff GmbH & Co. KG, 59227 Ahlen (DE)
(72) Erfinder: Surmann, Klemens, 59227 Ahlen (DE); Hemmesmann, André, 48336 Sassenberg (DE); Albinger, Bernd, 88348 Bad Saulgau (DE)
(74) Vertreter: Weeg, Thomas

(56) Entgegenhaltungen:
- EP-A1- 0 508 189
- DE-A1- 3 226 876
- DE-A1- 3 909 754
- DE-B3-102007 038 276

## Beschreibung

Die vorliegende Erfindung bezieht sich auf eine Mäh- und Einzugseinrichtung nach dem Oberbegriff des Anspruchs 1.

Eine Mäh- und Einzugseinrichtung ist aus der Schrift DE 32 26 876 A1 bekannt. In den verschiedenen Ansichten ist erkennbar, dass die äußeren Hüllkreise des rotierenden Messers und des feststehenden Gegenmessers einen unterschiedlichen Abstand zur Rotationsachse des Mährotors aufweisen. Die bekannten Mährotoren weisen kreisrunde Mäh- und Förderscheiben auf, die rotierend angetrieben sind.

Die bekannten Mäh- und Einzugseinrichtungen sind dazu geeignet, stängeliges Erntegut wie beispielsweise Mais reihenunabhängig zu mähen und einem nachgeordneten Verarbeitungsorgan wie beispielsweise einer Häckseleinrichtung zuzuführen. Mit der Einzugsfunktion ist die Abförderung des geschnittenen Ernteguts auf das nachgeordnete Verarbeitungsorgan zu gemeint. Es genügt, mit der an einem Trägerfahrzeug befestigten Mäh- und Einzugseinrichtung in den stehenden Bestand des Ernteguts hinein zu fahren. Die rotierend angetriebenen Mährotoren schneiden die Stängel bodennah dort ab, wo sie auf dem Feld stehen. Die Stängel werden dabei von der Mitnehmereinrichtung erfasst und aus der Schneidzone abgefördert, damit wieder neue Stängel geschnitten werden können.

In der Praxis hat sich gezeigt, dass es bei den bekannten Mäh- und Einzugseinrichtung immer wieder zu Mehrfachschnitten der Stängel kommt, bei denen die abgeschnittenen unteren Enden eines mehrfach geschnittenen Stängels nicht mehr von der Mitnehmereinrichtung erfasst werden können, auf den Boden fallen und damit als Erntegut verlustig gehen. Ein anderes Problem ist darin zu sehen, dass bewegte Teile der Schneideinrichtung, die über andere Teile der Schneideinrichtung überstehen, dazu neigen, Erntegut unkontrolliert außerhalb des dafür vorgesehenen Förderweges mitzunehmen und an einer Stelle abzulagern, wo sich das mitgenommene Erntegut ansammelt, aufbaut und dort den Gutfluss des Ernteguts stört und bewegte und/oder feststehende Teile der Mäh- und Einzugseinrichtung blockiert oder verbiegt. Insbesondere kann sich Erntegut zwischen dem feststehenden und dem rotierenden Messer aufbauen, wodurch die Messer auseinander gebogen werden und die Schnittfunktion beeinträchtigt wird, weil sich die Schneiden dann nicht mehr direkt treffen.

Eine gattungsgemäße Mäh- und Einzugseinrichtung ist aus der Schrift DE 39 09 754 A1 bekannt. Die rotierenden Messer sind an ihrem jeweiligen freien Ende nicht abgestützt, so dass sich zwischen einem rotierenden Messer und einem feststehenden Messer ein Abstand ausbilden kann, durch ein Schnitt mehr schlagend als schneidend wird. Auch hier besteht das Problem von Doppelschnitten, und es kann zum unkontrollierten Mitnehmen von Erntegut kommen.

Demgemäß ist es die Aufgabe der vorliegenden Erfindung, eine Mäh- und Einzugseinrichtung zu schaffen, bei der die Neigung zu Doppelschnitten und zum unkontrollierten Mitnehmen von Erntegut verringert ist.

Die Aufgabe wird für eine gattungsgemäße Mäh- und Einzugseinrichtung gelöst, indem das rotierende Messer auf der Oberfläche des feststehenden Gegenmessers gleitend im Mährotor geklemmt gehalten ist.

Je fester das rotierende Messer auf dem feststehenden Gegenmesser geklemmt gehalten ist, umso weniger Kraftbedarf ist für den von den beiden zusammenwirkenden Schneidkanten auszuführenden Schnitt aufzuwenden, und umso besser gelingt ein vergleichsweise kraftarmer ziehender Schnitt. Je weiter die bei einer Rotationsbewegung des rotierenden Messers übereinander gleitenden Schneidkanten voneinander beabstandet sind, umso mehr wandelt sich der ziehende Schnitt in einen Quetschvorgang, der erheblich höhere Kräfte zur erfolgreichen Abtrennung eines Stängels benötigt.

Die Hüllkreise des rotierenden Messers und des feststehenden Gegenmessers werden durch den Kreisbogen bestimmt, der um die äußersten vorstehenden Teile dieser Messer gezogen ist. Dadurch, dass die äußeren Hüllkreise des rotierenden Messers und des feststehenden Gegenmessers in zumindest einem Förderabschnitt in der Schneidzone des Mährotors einen identischen Abstand zur Rotationsachse des Mährotors aufweisen, stehen in diesem Förderabschnitt keine am Schneiden und Abfördern des Ernteguts beteiligten Teile mehr über andere Teile der Schneideinrichtung vor. Durch die bezogen auf die Rotationsachse des Mährotors sich zumindest in einem Förderabschnitt einander genau überdeckend verlaufenden Hüllkreise wird verhindert, dass ein Stängel bereits von dem feststehenden oder rotierenden Messer erfasst und angeschnitten wird, bevor er vollständig abgeschnitten und von der Mitnehmereinrichtung ergriffen und abgefördert werden kann. Es besteht deshalb das Risiko, dass ein angeschnittener Stängel verrutscht und deshalb mindestens noch einmal geschnitten wird, bevor er dann endlich von den Mitnehmerzähnen abgefördert wird, oder von den Mitnehmerzähnen erfasst und in seitlicher Richtung umgebogen und dabei gespannt wird, bevor er von dem rotierenden oder feststehenden Messer abgeschnitten ist, deshalb nach dem Schnitt durch eine zurückfedernde Bewegung aus der Aufnahmetasche heraus fällt und dabei erneut vor das rotierende oder feststehende Messer fällt, von dem es sodann erneut geschnitten wird, wenn der Stängel nicht sogar ganz verloren geht.

Durch die bezüglich der Rotationsachse des Mährotors sich in einem Förderabschnitt einander genau überdeckend verlaufenden Hüllkreise wird außerdem das Risiko verringert, dass Teile des rotierenden Messers Erntegut unkontrolliert erfassen und mitnehmen könnten, weil die Zeitpunkte des Schnittes der Stängel und der Aufnahme der geschnittenen Stängel in die Aufnahmetaschen und ihrer Abförderung in der Mitnehmereinrichtung enger beieinander liegen und die geschnittenen Stängel deshalb sicherer als Ganzes erfasst und kontrolliert abgefördert werden.

Mit dem identischen Abstand zur Rotationsachse ist zunächst ein Abstand gemeint, der tatsächlich identisch ist. Dies ist die beste Ausführungsform der Erfindung. Die Erfindung wird aber auch noch realisiert, wenn die Hüllkreise nur wenige Millimeter voneinander abweichen. Bei einem Versatz der Hüllkreise um bis zu 20 % der Dicke der zu erntenden Stängel - also bei einer Stängeldicke eines Maisstängels von beispielsweise 40 mm um 8 mm - ergeben sich noch immer die erfindungsgemäßen Effekte, nämlich die Verringerung der Zahl der Doppelschnitte und weniger unkontrollierte Mitnahmen von Erntegut.

Indem die Hüllkreise in zumindest einem Förderabschnitt in der Schneidzone des Mährotors einen identischen Abstand zur Rotationsachse des Mährotors aufweisen, wird in diesem Förderabschnitt die Zahl der Doppelschnitte verringert und die unkontrollierte Mitnahme von Erntegut reduziert. Der Förderabschnitt, in dem die Hüllkreise einen Identischen Abstand zur Rotationsachse aufweisen, muss sich nicht entlang der gesamten Bewegungsbahn eines Mährotors erstrecken, sondern es genügt, wenn dies der Fall in dem schneidwirksamen Bereich des Mährotors ist. So müssen die Abstände beispielsweise auf der der Fahrtrichtung entgegen gesetzten Seite eines Mährotors nicht mehr gleich sein, da dort keine Stängel auf den Mährotor auftreffen können. Demgemäß ist es auch nicht erforderlich, auf dieser Seite das feststehende Gegenmesser auszubilden.

Nach einer Ausgestaltung der Erfindung bilden das rotierende Messer und das feststehende Gegenmesser jeweils eine Mehrzahl von Schneidkanten aus, wobei die Schneidkanten des rotierenden Messers auf der nach innen weisenden Seite von am Außenumfang des rotierenden Messers beabstandet zueinander angeordneten und eine längliche Form aufweisenden Schneidfingern ausgebildet und die Schneidfinger der Rotationsrichtung des rotierenden Messers vorauseilend ausgerichtet sind, die Schneidkanten des feststehenden Gegenmessers sind auf der nach außen weisenden Seite des feststehenden Gegenmessers angeordnet, und die Schneidkanten des feststehenden Gegenmessers springen in Rotationsrichtung des rotierenden Messers nach außen hin vor, so dass sich bei einer Rotationsbewegung des rotierenden Messers zwischen den Schneidkanten des rotierenden Messers und des feststehenden Gegenmessers ein scherenartiger Schnitt ergibt.

Das rotierende Messer und das feststehende Gegenmesser muss nicht jeweils eine durchgehende Schneidkante aufweisen, sondern es ist möglich, an beiden Messern eine Mehrzahl von Schneidkanten auszubilden, die im Zusammenwirken miteinander einen zu erntenden Stängel durchtrennen. Das rotierende Messer und das feststehende Gegenmesser müssen auch nicht zwangsläufig aus einem einzigen Teil gebildet sein, beide Messer können mehrteilig aus mehreren Messern zusammengesetzt ausgebildet sein, wobei nachfolgend aus Gründen der Vereinfachung der Beschreibung jedoch immer nur von dem rotierenden Messer oder dem feststehenden Gegenmesser die Rede ist.

Solange der abzuschneidende Stängel nicht vollständig abgeschnitten wird, wird er über die noch nicht geschnittenen Faserstränge in seiner Schnittposition gehalten. Dadurch ist ein offener Schnitt der Stängel möglich, bei dem diese nicht durch zusätzliche Halteelemente während des Schnittes abgestützt werden müssen.

Die Abstände zwischen den Schneidfingern bilden Aufnahmezonen, durch die die zu schneidenden Stängel in den Wirkbereich zwischen den Schneidkanten gelangen können. Da sich die Schneidfinger mit dem rotierenden Messer in Rotationsrichtung bewegen, wandern die Aufnahmezonen mit der Rotationsbewegung des rotierenden Messers ständig um den Außenumfang eines Mährotors herum, so dass an jeder Stelle eines Mährotors ein Stängel in den Wirkbereich zwischen den Schneidkanten gelangen kann.

Indem die am rotierenden Messer ausgebildeten Schneidkanten auf der nach innen weisenden Seite der Schneidfinger angeordnet sind, sind diese weniger gefährdet, durch Anstöße an Fremdkörper beschädigt zu werden. Die Schneidfinger schirmen durch ihre vorauseilende Anordnung zudem den Schnittbereich gegen Fremdkörper und andere Stängel, die noch nicht geschnitten sind, solange ab, bis ein Schnitt vollständig vollzogen ist. Daraus ergibt sich ein sicherer ungestörter Schnitt mit einer hohen Schnittqualität. Die vorauseilenden Schneidfinger schützen aber auch die nach außen weisenden Schneidkanten des feststehenden Gegenmessers gegen Anstöße von Fremdkörpern, da die Schneidfinger die am feststehenden Gegenmesser ausgebildeten Schneidkanten bei ihrer rotierenden Bewegung ständig überstreichen und mit ihrer Außenkante daran anstoßende Fremdkörper wegschieben.

Die Schneidkanten des feststehenden Gegenmessers springen in Rotationsrichtung des rotierenden Messers nach außen hin vor. Dadurch entsteht an der Schneidkante des feststehenden Gegenmessers in Rotationsrichtung des rotierenden Messers ein in radialer Richtung nach außen wandernder Gleitpunkt, an dem die Schneidkante des rotierenden Messers auf die Schneidkante des feststehenden Gegenmessers trifft. Die Schneidkanten bilden in dieser Anordnung eine Art Schere, bei der sich die Schneidkanten des rotierenden Messers und des feststehenden Gegenmessers in Rotationsrichtung aufeinander zu bewegen. Ein zu schneidender Stängel wird zwischen den beiden Schneidkanten des rotierenden Messers und des feststehenden Gegenmessers von den beiden infolge der Rotationsbewegung des rotierenden Messers aufeinander zu eilenden Schneidkanten erfasst und schließlich durchtrennt.

Nach einer Ausgestaltung der Erfindung bilden die Schneidkanten des feststehenden Gegenmessers in dem Bereich, in dem sie nach außen hin vorspringen, einen Zwangsschnittbereich aus, und die in Rotationsrichtung des rotierenden Messers aufeinander folgenden Zwangsschnittbereiche sind jeweils durch einen Rücksprungbereich voneinander getrennt, in dem die Außenkante des feststehenden Gegenmessers nach innen hin zurückspringt. Der Rücksprungbereich ist erforderlich, um den Außenumfang des feststehenden Gegenmessers in Rotationsrichtung des rotierenden Messers nicht übermäßig wachsen zu lassen. Da sich im Rücksprungbereich des feststehenden Gegenmessers nicht die scherenartige Interaktion mit der Schneidkante des rotierenden Messers ergibt, können dort keine Zwangsschnitte erfolgen. Diese erfolgen dafür im Zwangsschnittbereich. Vorteilhaft ist der Winkelgrad, in dem sich ein Rücksprungbereich befindet, kleiner als der Winkelgrad, in dem ein Zwangsschnittbereich ausgebildet ist.

Nach einer Ausgestaltung der Erfindung weisen die Schneidfinger auf ihrer nach außen weisenden Seite eine bogenförmig verlaufende Kontur auf. Durch die bogenförmig verlaufende Kontur, insbesondere bei einer konvexen Bogenform, können sich keine Fremdkörper mit den Schneidfingern verhaken, sie gleiten an dem bogenförmigen Verlauf ab. Durch den bogenförmigen Verlauf kann die Form der Schneidfinger auch gut an den Hüllkreis des rotierenden Messers angepasst werden. Durch den bogenförmigen Verlauf erreicht der Schneidfinger auch bei einer gerade verlaufenden Schneidkante auf der Innenseite in seinem mittleren Abschnitt, in dem hohe Schneidkräfte auf ihn einwirken, eine hohe Breite und damit eine gute Festigkeit.

Nach einer Ausgestaltung der Erfindung weisen die Schneidkanten des rotierenden Messers und des feststehenden Gegenmessers in zumindest einem Teilabschnitt einen geradlinigen Verlauf auf. Durch den geradlinigen Verlauf ergibt sich ein sehr gleichmäßiger konstanter Schnitt, bei dem Kraftspitzen, die aus einem nichtlinearen Verlauf der Schneidkanten resultieren, über den Zwangsschnittbereich hinweg vermieden werden. Es ist vorteilhaft, wenn die Schneidkanten über ihre gesamte Länge eines Zwangsschnittbereichs einen geradlinigen Verlauf aufweisen, da sich der gleichmäßige Schnitt dann über die gesamte Länge erstreckt. Um die Schnittleistung zu verbessern, ist ein Wellenschliff der Schneidkante möglich, trotz des Wellenschliffs liegt dann aber immer noch ein geradliniger Verlauf vor, wenn sich aus dem gemittelten Wellenbild immer noch ein geradliniger Verlauf der Schneidkante erkennen lässt.

Nach einer Ausgestaltung der Erfindung weisen die Schneidkanten des rotierenden Messers, die über ihre Länge mit einer gegenüberliegenden Schneidkante des feststehenden Gegenmessers für einen Schnitt interagieren, eine kürzere Länge auf als die Schneidkanten des feststehenden Gegenmessers. Durch die kürzere Länge der Schneidkanten des rotierenden Messers können Stängel beim Schnitt vom rotierenden Messer getrieben an der längeren Schneidkante des feststehenden Gegenmessers ein Stück entlang rutschen, ohne dass dadurch der Schnitt misslingt oder die Schnittkante des rotierenden Messers gleich lang gemacht werden müsste.

Nach einer Ausgestaltung der Erfindung weist das feststehende Gegenmesser quer zur Rotationsrichtung des rotierenden Messers eine sich an die Schneidkanten nach innen anschließende, als Gleitfläche ausgebildete glatte Oberfläche und das rotierende Messer eine sich entgegen der Rotationsrichtung und sich nach innen an die Schneidkante anschließende Gleitfläche auf, auf der die Stängel des geschnittenen Ernteguts stehend von der Mitnehmereinrichtung abförderbar sind, und die Oberflächen reichen bis in eine Tiefe des Mährotors hinein, die zumindest einem Teil der Tiefe der Aufnahmetaschen entspricht. Durch die sich direkt an die Schneidkanten anschließenden glatten Oberflächen kann der frisch geschnittene Stängel nicht nach unten wegrutschen, sondern er wird von den Gleitflächen gestützt gehalten. Da sich der frisch geschnittene Stängel durch die Abstützung mittels der Gleitflächen nicht mehr in vertikaler Richtung bewegen kann, erhöht sich die Erfassungssicherheit der Mitnehmerzähne, die den frisch geschnittenen Stängel direkt nach dem Schnitt erfassen und in der zumindest annähernd horizontalen Förderrichtung beschleunigen. Indem sich der Stängel nach dem Schnitt nur noch in die horizontale Förderrichtung bewegen kann, fallen geschnittene Stängel weniger leicht aus der Mitnehmereinrichtung heraus.

Nach einer Ausgestaltung der Erfindung überschneiden sich die Hüllkreise benachbarter Mährotoren nicht. Durch die fehlende Überschneidung der Hüllkreise ist es möglich, die Schnitt- und Abförderfunktion der Mährotoren zu optimieren, indem diese durch die Form und Anzahl der Schneidfinger und Schneidkanten an dem rotierenden Messer und der Form und Anzahl der Schneidkanten an dem feststehenden Gegenmesser auf ein bestmögliches Schnitt- und Abförderergebnis hin ausgelegt sind.

Nach einer Ausgestaltung der Erfindung ist die Drehzahl des rotierenden Messers variabel einstellbar. Durch die Einstellbarkeit der Drehzahl kann die Bewegungsgeschwindigkeit des rotierenden Messers an die Vorfahrtgeschwindigkeit des Trägerfahrzeugs angepasst werden. Es ist aber auch möglich, die Schnittfunktion durch eine veränderte Rotationsgeschwindigkeit an unterschiedliche Stängeldurchmesser anzupassen und das Schnittergebnis zu verbessern.

Nach einer Ausgestaltung der Erfindung ist der Mährotor mit einer Unterseite des rotierenden Messers auf der Oberfläche des feststehenden Gegenmessers gleitend abgestützt, der Mährotor ist mit seiner Rotorachse drehfest, aber längsverschieblich auf die Antriebswelle des Mährotors aufgesetzt, mit der Antriebswelle ist ein Endanschlag mit einer daran ausgebildeten ersten Stützfläche verbunden, an der Rotorachse ist eine der ersten Stützfläche zugewandte und beabstandet dazu angeordnete zweite Stützflächen vorhanden, und zwischen den einander zugewandten ersten und zweiten Stützflächen ist ein Federelement eingespannt, über das der Endanschlag und die Rotorachse miteinander verbunden sind. Durch das Federelement wird der Mährotor über die rotorachsenseitige Stützfläche auf das feststehende Gegenmesser gedrückt. Da die Rotorachse längsverschieblich auf der Antriebswelle angeordnet ist, kann sich der Mährotor nach Bedarf und Krafteinwirkung längs der Antriebswelle dort positionieren, wo sich ein Kräftegleichgewicht einstellt. Das Federelement erzeugt auf diese Weise eine Vorspannung, durch die das rotierende Messer und das feststehende Gegenmesser aufeinander gleitend gehalten werden. Die Vorspannung sollte nicht zu hoch gewählt werden, da sonst die Reibungskräfte des rotierenden Messers auf dem feststehenden Gegenmesser zu hoch werden, auch nimmt dann der Verschleiß der aufeinander gleitenden Flächen zu. Die Vorspannung sollte aber auch nicht zu gering gewählt werden, um die Messer noch mit einem möglichst geringen Spaltmaß aufeinander zu halten, um davon über einen daraus folgenden für den Schnitt von Stängeln möglichst niedrigen Kraftbedarf und Energieverbrauch zu profitieren.

Je fester das rotierende Messer auf dem feststehenden Gegenmesser geklemmt gehalten ist, umso weniger Kraftbedarf ist für den von den beiden zusammenwirkenden Schneidkanten auszuführenden Schnitt aufzuwenden, und umso besser gelingt ein vergleichsweise kraftarmer ziehender Schnitt. Je weiter die bei einer Rotationsbewegung des rotierenden Messers übereinander gleitenden Schneidkanten voneinander beabstandet sind, umso mehr wandelt sich der ziehende Schnitt in einen Quetschvorgang, der erheblich höhere Kräfte zur erfolgreichen Abtrennung eines Stängels benötigt.

Als Federelement kann eine Schrauben- oder Tellerfeder verwendet sein. Als Federelement kann aber auch ein Körper aus einem elastischen Material verwendet sein, wie beispielsweise Gummi, oder es wird eine Gasblase oder eine Hydraulikflüssigkeit mit einem entsprechenden Ventil verwendet, um das Federelement zu realisieren.

Das Federelement vereinfacht die Fertigung eines Mährotors, da das Federelement Fertigungsungenauigkeiten auszugleichen vermag. Im Gebrauch der Mäh- und Einzugseinrichtung verringert sich der Wartungsaufwand, da das rotierende Messer über das Federelement automatisch nachgestellt wird, wenn Verschleiß auftritt.

Nach einer Ausgestaltung der Erfindung weist der Endanschlag ein Druckstück auf, das über eine Verschraubung mit der Antriebswelle verbunden ist, wobei die Verschraubung einen Anschlag für das Druckstück bildet, über die das Druckstück in einer Blockierstellung gehalten ist. Durch die Verschraubung wird die Montage vereinfacht. Auch Wartungsarbeiten können leichter vorgenommen werden, da der Mährotor nach dem Lösen der Verschraubung einfach von der Antriebswelle abgehoben werden kann. Die Verschraubung ist auch auf einfache Weise herstellbar. Der Anschlag kann über eine Unterlegscheibe als ein Teil der Verschraubung ausgebildet sein, die die Antriebswelle überragt, wobei dann der die Antriebswelle seitlich überragende Teil den Anschlag für das Druckstück bildet.

Weitere Abwandlungen und Ausgestaltungen der Erfindung lassen sich der nachfolgenden gegenständlichen Beschreibung und den Zeichnungen entnehmen.

Die Erfindung soll nun anhand eines Ausführungsbeispiels näher beschrieben werden. Es zeigen:
- Fig. 1:: eine Ansicht auf eine Mäh- und Einzugseinrichtung mit einem Trägerfahrzeug aus eine Ansicht von oben,
- Fig. 2:: einen Mährotor aus einer Ansicht von unten,
- Fig. 3:: einen Mährotor aus einer Ansicht von oben,
- Fig. 4:: eine Teilansicht der Schneideinrichtung aus einer Ansicht von oben,
- Fig. 5:: eine Teilansicht der Schneideinrichtung aus einer Ansicht von unten,
- Fig. 6:: eine Teilansicht auf einen Mährotor von oben,
- Fig. 7:: eine Ansicht auf einen Mährotor von schräg vorne,
- Fig. 8:: eine Schnittansicht auf einen Mährotor, und
- Fig. 9:: eine vergrößerte Schnittansicht eines Mährotors.

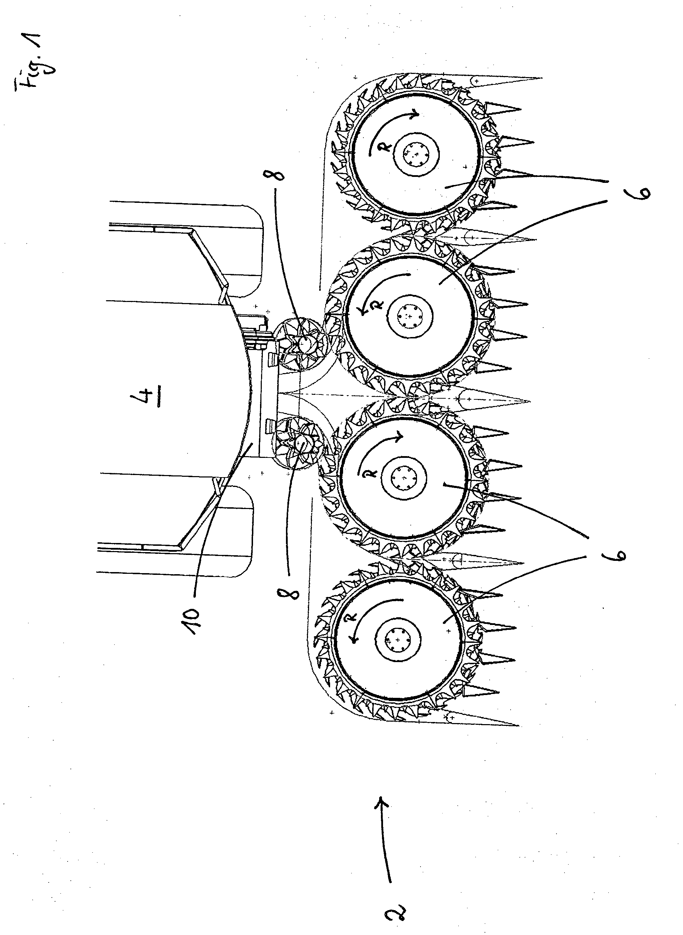

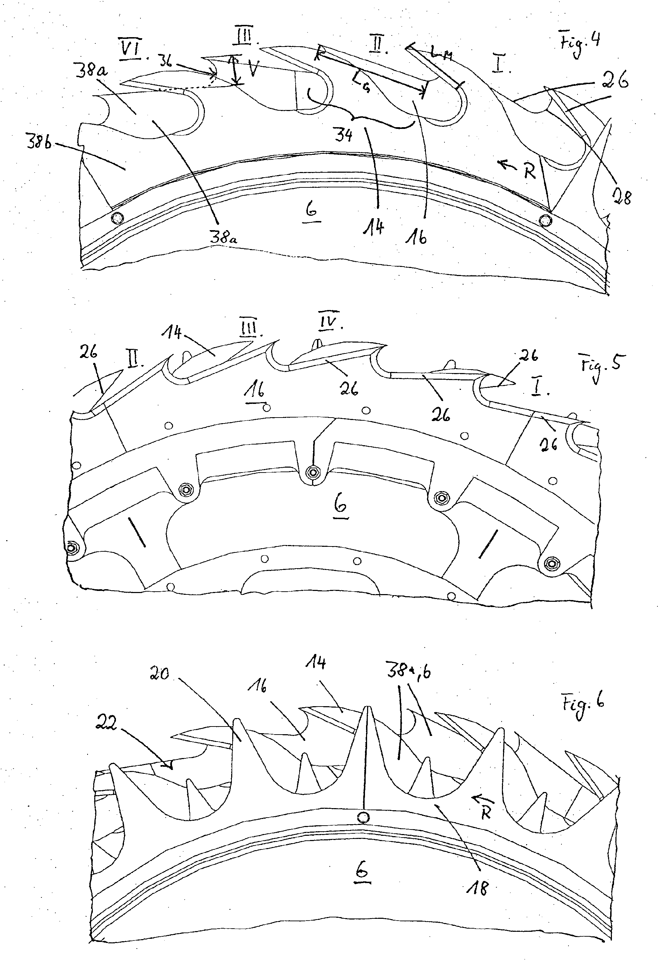

In Fig. 1 ist eine beispielhafte Mäh- und Einzugseinrichtung 2 gezeigt, die mit einem Trägerfahrzeug 4, beispielsweise einem selbstfahrenden Feldhäcksler, der in Fig. 1 in einer Teilansicht dargestellt ist, verbunden ist. Die beispielhaft gezeigte Mäh- und Einzugseinrichtung 2 verfügt in Fig. 4 über vier Mährotoren 6, die nebeneinander angeordnet sind. Die Hüllkreise H der Mährotoren 6 überschneiden sich nicht. Während sich der linke und der zweite Mährotor 6 von rechts entgegen dem Uhrzeigersinn drehen, sind der rechte und der zweite Mährotor 6 von links für eine Rotationsrichtung R im Uhrzeigersinn ausgelegt. Die jeweilige Rotationsrichtung R ist durch einen Pfeil angedeutet.

In Gutflussrichtung des Ernteguts gesehen schließen sich an die Mährotoren 6 zwei Wendetrommeln 8 an, mit denen der Gutfluss zum Einzugskanal 10 des Trägerfahrzeugs 4 hin umgelenkt wird. Innerhalb des Trägerfahrzeugs 4 wird das Erntegut dann auf eine geeignete Art und Weise weiterverarbeitet.

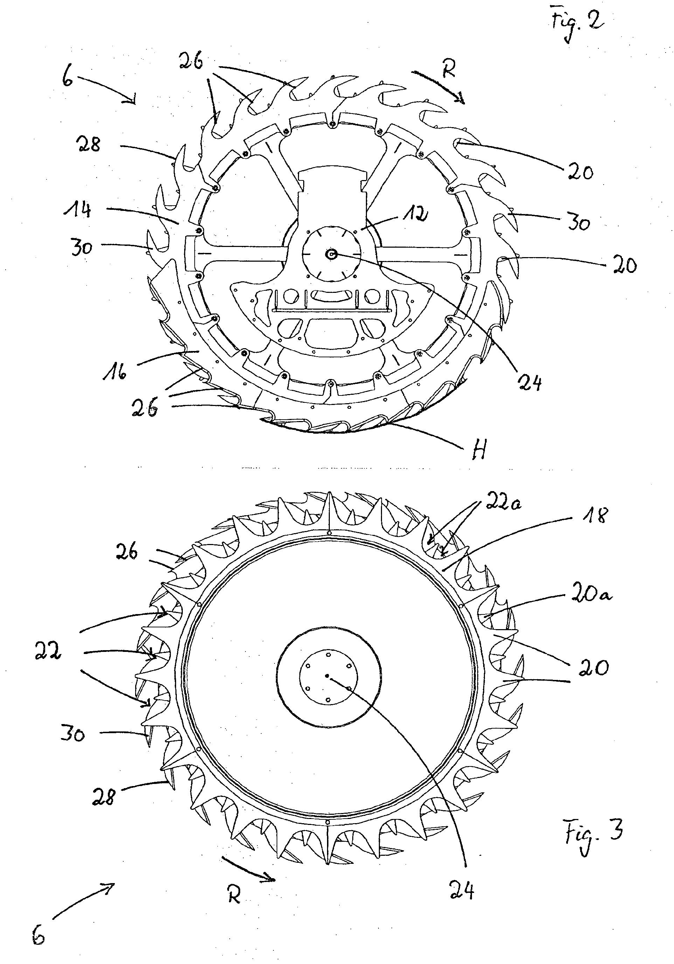

In Fig. 2 ist ein Mährotor 6 aus einer Ansicht von unten gezeigt. Während im Ausführungsbeispiel das rotierende Messer 14 auf dem gesamten Umfang des Mährotors 6 angeordnet ist, bleibt das feststehende Gegenmesser 16 auf einen Teilbereich beschränkt, der im Ausführungsbeispiel weniger als die Hälfte des Umfangskreises des Mährotors 6 abdeckt. Sowohl das rotierende Messer 14 als auch das feststehende Gegenmesser 16 sind jeweils aus mehreren Teilsegmenten zusammengesetzt. Bei Beschädigungen von Messern ist es dadurch einfacher, nur die Teilsegmente auszutauschen. Darüber hinaus verfügt der Mährotor 6 noch über eine Mitnehmereinrichtung 18, von der in Fig. 2 die Mitnehmerzähne 20 aus der Ansicht von unten teilweise zu sehen sind. Die Hüllkreise des rotierenden Messers 14 und des feststehenden Gegenmessers 16 sind identisch, im Ausführungsbeispiel ist auch der Hüllkreis der Spitzen der Mitnehmerzähne 20 identisch zu den Hüllkreisen der Messer.

Der Mährotor 6 rotiert in Rotationsrichtung R um die Rotationsachse 24 herum. Sowohl das rotierende Messer 14 als auch das feststehende Gegenmesser 16 verfügen über eine Anzahl von Schneidkanten 26, wobei die Schneidkanten 26 des rotierenden Messers 14 die Besonderheit aufweisen, dass sie auf der nach innen weisenden Seite der Schneidfinger 30 angeordnet sind.

Da um den Umfang eines Mährotors 6 herum eine größere Anzahl von Schneidfingern 30 angeordnet ist, die in einem Abstand zueinander angeordnet sind, ergibt sich eine entsprechend große Zahl von Schneidkanten 26 an dem rotierenden Messer 14. Die Schneidfinger 30 sind der Rotationsrichtung R des rotierenden Messers 14 vorauseilend ausgerichtet.

Auch am feststehenden Gegenmesser 16 sind eine Mehrzahl von Schneidkanten 26 ausgebildet. Die Schneidkanten 26 am feststehenden Gegenmesser 14 befinden sich allerdings auf der nach außen weisenden Seite des feststehenden Gegenmessers 14. Durch diese Anordnung ergibt es sich, dass die Schneidkanten 26 des rotierenden Messers 14 und des feststehenden Gegenmessers 16 bei einer Rotationsbewegung des rotierenden Messers 16 scherenartig zusammenwirken können, um den Stängel eines zu schneidenden Ernteguts abzuschneiden.

Die Abstände zwischen den Schneidfingern 30 bilden Aufnahmezonen, durch die zu schneidende Stängel in den Wirkbereich zwischen den Schneidkanten 26 des rotierenden Messers 14 und des feststehenden Gegenmessers 16 gelangen können.

In Fig. 3 sind aus der Ansicht von oben die Mitnehmereinrichtung 18 sowie die Aufnahmetaschen 22 besser erkennbar als aus der Ansicht von unten. Die Mitnehmereinrichtung 18 verfügt über eine Anzahl von Mitnehmerzähnen 20, zwischen denen die Aufnahmetaschen 22 ausgebildet sind. Im Ausführungsbeispiel sind an der Mitnehmereinrichtung 18 noch kürzere Mitnehmerzähne 20a vorhanden, durch die eine von längeren Mitnehmerzähnen 20 gebildete große Aufnahmetasche 22 in zwei kleinere Aufnahmetaschen 22a unterteilt wird. Insbesondere wenn mehrere Stängel in einer großen Aufnahmetasche 22 transportiert werden sollen, ist es möglich, mit den kleineren Mitnehmerzähnen 20a die Stängel im Grund einer Aufnahmetasche 22 zu halten.

In Fig. 4 ist eine Teilansicht auf die Schneideinrichtung eines Mährotors 6 gezeigt, die von dem rotierenden Messer 14 und dem feststehenden Gegenmesser 16 gebildet ist. In Fig. 4 sind vier Schnittphasen I bis IV gezeigt. In der Schnittphase I beginnt die Schneidkante 26 des rotierenden Messers 14 einen Zwangsschnittbereich 34 zu erreichen, dessen Länge durch die Länge L (G) der Schneidkante 26 des feststehenden Gegenmessers 16 definiert ist. Die Schneidkante 26 des rotierenden Messers 14 weist die Länge L (M) auf. In der Schnittphase II bewegt sich die Schneidkante 26 des rotierenden Messers 14 auf die Schneidkante 26 des feststehenden Gegenmessers 16 zu. Der Winkel zwischen den beiden Schneidkanten ist noch relativ groß, und der Zwangsschnittbereich 34 ist noch nahezu vollständig offen, um noch Erntegutstängel, die zu schneiden sind, einlaufen lassen und aufnehmen zu können. In der Schnittphase III beginnt die Schneidkante 26 des rotierenden Messers 14 die Schneidkante des feststehenden Gegenmessers 16 zu überlaufen, der Anstellwinkel zwischen den beiden Schneidkanten 26 wird flacher, und der Zwangsschnittbereich 34 beginnt sich zu schließen. In der Schnittphase IV hat die Schneidkante 26 des rotierenden Messers 14 bereits den überwiegenden Teil der Schneidkante 26 des feststehenden Gegenmessers 16 passiert. Der Anstellwinkel zwischen den beiden Schneidkanten ist sehr flach geworden. Ein Stängel, der sich im Zwangsschnittbereich 34 befunden hat, dürfte in der Schnittphase IV vollständig oder zumindest nahezu abgeschnitten sein. Durch die identischen Hüllkreise H kann an dem rotierenden Messer 14 nichts hängenbleiben, da auch dessen äußere Spitze am Ende einer Schnittphase IV immer über eine Schneidkante des feststehenden Gegenmessers 16 hinwegläuft und anhaftendes Erntegut dabei angeschnitten wird.

Aus der Detailansicht in Fig. 4 ist erkennbar, dass die Schneidkanten 26 des feststehenden Gegenmessers 16 in einem Anstellwinkel zum Kreisbogen des Hüllkreises H des rotierenden Messers 14 hin angestellt sind. Durch den Anstellwinkel springen die Schneidkanten 26 in Rotationsrichtung des rotierenden Messers 14 nach außen hin vor, und zwar um das Maß des Vorsprungs V. Zwei benachbarte Zwangsschnittbereiche 34 an dem feststehenden Gegenmesser 16 sind durch einen Rücksprungbereich 36 voneinander getrennt, indem der Außenumfang des feststehenden Messers 16 um das Maß V zurückspringt, wo ein neuer Zwangsschnittbereich 34 beginnt, der sich über seine Länge L hinweg bis zu seinem Ende hin wieder um das Maß des Vorsprungs 32 nach außen hin vorschiebt. Die Außenkante 28 des feststehenden Gegenmessers 16 hat im Rücksprungbereich 36 eine bogenförmig verlaufende Kontur. In Fig. 5 ist auch aus der Ansicht von unten erkennbar, dass die Schneidfinger 30 auf ihrer nach außen weisenden Seite eine bogenförmig verlaufende Kontur aufweisen. Auch hier sind die Schnittphasen I bis IV so bezeichnet, wie sie zur Fig. 4 vorstehend erläutert worden sind. Auch in Fig. 5 ist im Ablauf der Schnittphasen I bis IV die Interaktion der Schneidkanten 26 des rotierenden Messers 14 und des feststehenden Gegenmessers 16 gut erkennbar.

In Fig. 4 ist die Gleitfläche 38a erkennbar, die auf der Oberfläche des feststehenden Gegenmessers 16 ausgebildet ist. Die Gleitfläche 38a schließt sich an die Schneidkanten 26 des feststehenden Gegenmessers 16 an. Stängel, die von den Schneidkanten 26 geschnitten sind, können vom rotierenden Messer 14 mitgenommen und über die Gleitfläche 38a geschoben werden. Im weiteren Verlauf können die geschnittenen Stängel mit der stirnseitigen Schnittfläche auch auf die Gleitfläche 38b gelangen, die auf dem rotierenden Messer 14 ausgebildet ist. Durch die Gleitflächen 38a, 38b können die geschnittenen Stängel mitgenommen und auf das Trägerfahrzeug 4 zu eingezogen werden.

In Fig. 6 ist eine Teilansicht auf den Mährotor 6 aus einer Ansicht von oben gezeigt, wobei auch die Mitnehmereinrichtung 18 mit den Mitnehmerzähnen 20 und den Aufnahmetaschen 22 zu erkennen ist. Aus der Ansicht von oben ist erkennbar, dass ein Stängel, der von dem rotierenden Messer 14 und dem feststehenden Gegenmesser 16 geschnitten worden ist, in einer Aufnahmetasche 22 stehend auf den Oberflächen des feststehenden Messers 14 und des feststehenden Gegenmessers 16 gleitend transportiert wird, wenn sich die Mitnehmereinrichtung 18 in Rotationsrichtung R dreht.

Dabei bildet die Oberfläche des rotierenden Messers 14 die Gleitfläche 38b und die Oberfläche des feststehenden Gegenmessers 16 die Gleitfläche 38a aus.

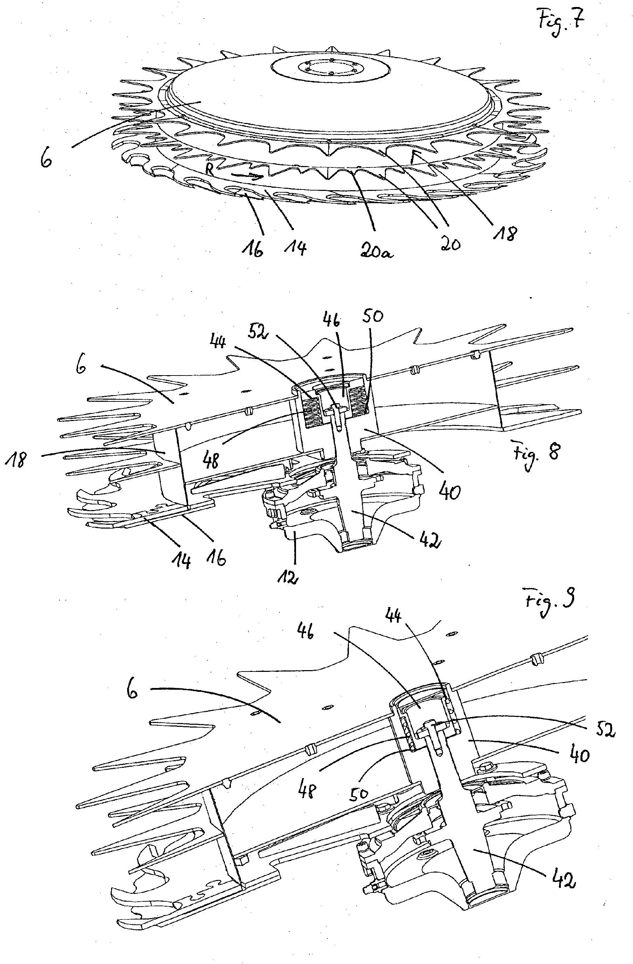

In Fig. 7 ist ein Mährotor 6 aus einer Ansicht von schräg vorne zu sehen. In der Ansicht in Fig. 7 ist erkennbar, dass die Mitnehmereinrichtung 18 aus zwei Zahnkränzen mit Mitnehmerzähnen 20 besteht, wobei nur der untere Zahnkranz die zusätzlichen kürzeren Mitnehmerzähne 20a aufweist. Auch ist das rotierende Messer 14 sowie das feststehende Messer 16 gut erkennbar. Da das rotierende Messer 14 direkt mit der Mitnehmereinrichtung 18 verbunden ist, dreht sich das rotierende Messer 14 bei einer Rotationsbewegung des Mährotors 6 mit.

In Fig. 8 ist eine Querschnittsansicht durch einen Mährotor 6 gezeigt. In der Schnittansicht ist erkennbar, dass der Mährotor 6 eine Rotorachse 40 aufweist, die auf die Antriebswelle 42 aufgesetzt ist. Das feststehende Messer 16 ist fest mit dem Rahmen 12 verbunden, wobei der Rahmen 12 im Ausführungsbeispiel in Fig. 8 ein Getriebegehäuse als Bauteil zeigt. Das rotierende Messer 14 ist mit der rotierend beweglichen Mitnehmereinrichtung 18 fest verbunden. Die Mitnehmereinrichtung 18 ist wiederum mit der Rotorachse 40 fest verbunden. Der Mährotor 6 liegt mit der Unterseite des rotierenden Messers 40 auf der Oberfläche des feststehenden Gegenmessers 16 auf und gleitet bei einer Rotationsbewegung des Mährotors 6 über die Oberfläche des feststehenden Gegenmessers 16. Nach unten hin ist der Mährotor 6 auf diese Weise durch das feststehende Gegenmesser 16 abgestützt.

Der Mährotor 6 ist mit seiner Rotorachse 40 drehfest, aber längsverschieblich auf der Antriebswelle 42 des Mährotors 6 aufgesetzt. An der Antriebswelle 42 ist ein Endanschlag in Gestalt einer Verschraubung 52 angebracht. Die Verschraubung 52, die aus einer Schraube und einer Unterlegscheibe besteht, begrenzt den Bewegungsweg für die Rotorachse 40 nach oben hin. Die Unterlegscheibe wird durch die Verschraubung 52 auf die Oberfläche eines Druckstücks 46 gedrückt, das eine nach unten weisende erste Stützfläche 44 aufweist. Eine zweite Stützfläche 50 ist an dem Druckstück 46 ausgebildet.

Zwischen den beiden Stützflächen 44, 50 befindet sich ein Federelement 48, das im Ausführungsbeispiel aus einer Anzahl von Tellerfedern besteht. Wenn das Federelement 48 durch Anziehen der Verschraubung 52 über das Druckstück 46 unter Druck gesetzt wird, überträgt sich der Druck auf die Rotorachse 40, wodurch der Mährotor 6 mit der daran befestigten Mitnehmereinrichtung 18 und dem ebenfalls daran befestigten rotierenden Messer 14 auf das feststehende Gegenmesser 16 angedrückt wird. Daraus resultiert ein Anpressdruck, mit dem das rotierende Messer 14 auf das feststehende Gegenmesser 16 gedrückt ist. Durch die spielfreie Drehbewegung des rotierenden Messers 14 auf den feststehenden Gegenmesser 16 können die Schneidkanten 46 dieser beiden Messer scherenartig zusammenwirken und einen glatten Schnitt erzeugen.

In dem in Fig. 9 gezeigten Schnitt durch den Mährotor 6 ist als Federelement 48 eine Schraubenfeder 48 gezeigt, ansonsten entspricht der Aufbau des Mährotors in Fig. 9 dem vorstehend beschriebenen Aufbau in Fig. 8.

Die vorstehende gegenständliche Beschreibung dient nur der Erläuterung der Erfindung. Die Erfindung ist nicht auf das beschriebene Ausführungsbeispiel beschränkt. Dem Fachmann bereitet es keine Schwierigkeiten, die Erfindung durch Abwandlung des Ausführungsbeispiels auf eine ihm als geeignet erscheinende Weise an einen konkreten Anwendungsfall anzupassen.

## Patentansprüche

1. Mäh- und Einzugseinrichtung (2) zum Schneiden und Abfördern von stängeligem Erntegut mit einer Mehrzahl von Mährotoren (6), die über die Arbeitsbreite der Mäh- und Einzugseinrichtung (2) verteilt angeordnet sind, wobei jeder Mährotor (6) eine Mitnehmereinrichtung (18) und eine Schneideinrichtung mit einem rotierenden Messer (14) und einem feststehenden Gegenmesser (16) aufweist, und an der Mitnehmereinrichtung (18) an ihrem Außenumfang verteilt Mitnehmerzähne (20) angeordnet sind, die zwischen sich Aufnahmetaschen (22) zur Aufnahme und Abförderung des geschnittenen Ernteguts ausbilden, wobei die äußeren Hüllkreise (H) des rotierenden Messers (14) und des feststehenden Gegenmessers (16) in zumindest einem Förderabschnitt in der Schneidzone des Mährotors (6) einen identischen Abstand zur Rotationsachse (24) des Mährotors (6) aufweisen, **dadurch gekennzeichnet, dass** das rotierende Messer (14) auf der Oberfläche des feststehenden Gegenmessers (16) gleitend im Mährotor (6) geklemmt gehalten ist.

2. Mäh- und Einzugseinrichtung (2) nach Anspruch 1, **dadurch gekennzeichnet, dass** das rotierende Messer (14) und das feststehende Gegenmesser (16) jeweils eine Mehrzahl von Schneidkanten (26) ausbilden, wobei die Schneidkanten (26) des rotierenden Messers (14) auf der nach innen weisenden Seite von am Außenumfang des rotierenden Messers (14) beabstandet zueinander angeordneten und eine längliche Form aufweisenden Schneidfingern (30) ausgebildet und die Schneidfinger (30) der Rotationsrichtung (R) des rotierenden Messers (14) vorauseilend ausgerichtet sind, die Schneidkanten (26) des feststehenden Gegenmessers (16) auf der nach außen weisenden Seite des feststehenden Gegenmessers (16) angeordnet sind, und die Schneidkanten (26) des feststehenden Gegenmessers (16) in Rotationsrichtung (R) des rotierenden Messers (14) nach außen hin vorspringen, so dass sich bei einer Rotationsbewegung des rotierenden Messers (14) zwischen den Schneidkanten (26) des rotierenden Messers (14) und des feststehenden Gegenmessers (16) ein scherenartiger Schnitt ergibt.

3. Mäh- und Einzugseinrichtung (2) nach Anspruch 2, **dadurch gekennzeichnet, dass** die Schneidkanten (26) des feststehenden Gegenmessers (16) in dem Bereich, in dem sie nach außen hin vorspringen, einen Zwangsschnittbereich (34) ausbilden, und die in Rotationsrichtung (R) des rotierenden Messers (14) aufeinander folgenden Zwangsschnittbereiche (34) jeweils durch einen Rücksprungbereich (36) voneinander getrennt sind, in dem die Außenkante (28) des feststehenden Gegenmessers (16) nach innen hin zurückspringt.

4. Mäh- und Einzugseinrichtung (2) nach Anspruch 3, **dadurch gekennzeichnet, dass** die Außenkante (28) des feststehenden Gegenmessers (16) im Rücksprungbereich (36) eine bogenförmig verlaufende Kontur aufweist.

5. Mäh- und Einzugseinrichtung (2) nach einem der vorhergehenden Ansprüche, **dadurch gekennzeichnet, dass** die Schneidfinger (30) auf ihrer nach außen weisenden Seite eine bogenförmig verlaufende Kontur aufweisen.

6. Mäh- und Einzugseinrichtung (2) nach einem der vorhergehenden Ansprüche 2 bis 4, **dadurch gekennzeichnet, dass** die Schneidkanten (26) des rotierenden Messers (14) und des feststehenden Gegenmessers (16) in zumindest einem Teilabschnitt einen geradlinigen Verlauf aufweisen.

7. Mäh- und Einzugseinrichtung (2) nach einem der vorhergehenden Ansprüche 2 bis 4 oder 6, **dadurch gekennzeichnet, dass** die Schneidkanten (26) des rotierenden Messers (14), die über ihre Länge (L) mit einer gegenüberliegenden Schneidkante (26) des feststehenden Gegenmessers (16) für einen Schnitt interagieren, eine kürzere Länge (L) aufweisen als die Schneidkanten (26) des feststehenden Gegenmessers (16).

8. Mäh- und Einzugseinrichtung (2) nach einem der vorhergehenden Ansprüche, **dadurch gekennzeichnet, dass** das feststehende Gegenmesser (16) quer zur Rotationsrichtung (R) des rotierenden Messers (14) eine sich an die Schneidkanten (26) nach innen anschließende, als Gleitfläche (38a) ausgebildete glatte Oberfläche und das rotierende Messer (14) eine sich entgegen der Rotationsrichtung und sich nach innen an die Schneidkante (26) anschließende Gleitfläche (38b) aufweist, auf der die Stängel des geschnittenen Ernteguts stehend von der Mitnehmereinrichtung (18) abförderbar sind, und die Oberflächen bis in eine Tiefe des Mährotors (6) hineinreichen, die zumindest einem Teil der Tiefe der Aufnahmetaschen (22) entspricht.

9. Mäh- und Einzugseinrichtung (2) nach einem der vorhergehenden Ansprüche, **dadurch gekennzeichnet, dass** sich die Hüllkreise (H) benachbarter Mährotoren (6) nicht überschneiden.

10. Mäh- und Einzugseinrichtung (2) nach einem der vorhergehenden Ansprüche, **dadurch gekennzeichnet, dass** die Drehzahl des rotierenden Messers (14) variabel einstellbar ist.

11. Mäh- und Einzugseinrichtung (2) nach einem der vorhergehenden Ansprüche, **dadurch gekennzeichnet, dass** der Mährotor (6) mit einer Unterseite des rotierenden Messers (14) auf der Oberfläche des feststehenden Gegenmessers (16) gleitend abgestützt ist, der Mährotor (6) mit seiner Rotorachse (40) drehfest, aber längsverschieblich auf die Antriebswelle (42) des Mährotors (6) aufgesetzt ist, mit der Antriebswelle (42) ein Endanschlag mit einer daran ausgebildeten ersten Stützfläche (44) verbunden ist, an der Rotorachse (40) eine der ersten Stützfläche (44) zugewandte und beabstandet dazu angeordnete zweite Stützfläche (50) vorhanden ist, und zwischen den einander zugewandten ersten und zweiten Stützflächen (42, 50) ein Federelement (48) eingespannt ist, über das der Endanschlag und die Rotorachse (40) miteinander verbunden sind.

12. Mäh- und Einzugseinrichtung (2) nach einem der vorhergehenden Ansprüche, **dadurch gekennzeichnet, dass** der Endanschlag ein Druckstück (46) aufweist, das über eine Verschraubung mit der Antriebswelle (42) verbunden ist, wobei die Verschraubung einen Anschlag für das Druckstück (46) bildet, über die das Druckstück (46) in einer Blockierstellung gehalten ist.

## Claims

1. Mowing and intake device (2) for cutting and transporting away stalk crops, comprising a plurality of mowing rotors (6) which are arranged so as to be distributed across the working width of the mowing and intake device (2), each mowing rotor (6) having a carrier device (18) and a cutting device comprising a rotating blade (14) and a stationary counter-blade (16), and carrier teeth (20) being arranged so as to be distributed on the outer periphery of the carrier device (18), which teeth form receiving pockets (22) therebetween for receiving and transporting away the chopped crops, the outer minimum circumscribed circles (H) of the rotating blade (14) and of the stationary counter-blade (16) being at an identical spacing from the axis of rotation (24) of the mowing rotor (6) in at least one conveying portion in the cutting zone of the mowing rotor (6), **characterised in that** the rotating blade (14) is held in a clamped manner in the mowing rotor (6) so as to slide on the surface of the stationary counter-blade (16).

2. Mowing and intake device (2) according to claim 1, **characterised in that** the rotating blade (14) and the stationary counter-blade (16) each form a plurality of cutting edges (26), the cutting edges (26) of the rotating blade (14) being formed on the inwardly facing side of cutting fingers (30) that are arranged at a distance from one another on the outer periphery of the rotating blade (14) and have an elongate shape, and the cutting fingers (30) being oriented so as to advance in the direction of rotation (R) of the rotating blade (14), the cutting edges (26) of the stationary counter-blade (16) being arranged on the outwardly facing side of the stationary counter-blade (16), and the cutting edges (26) of the stationary counter-blade (16) projecting outwards in the direction of rotation (R) of the rotating blade (14) so as to result in a scissor-like cut between the cutting edges (26) of the rotating blade (14) and of the stationary counter-blade (16) during a rotational movement of the rotating blade (14).

3. Mowing and intake device (2) according to claim 2, **characterised in that** the cutting edges (26) of the stationary counter-blade (16) form a forced-cut region (34) in the region in which said edges project outwards, and the forced-cut regions (34), which are sequential in the direction of rotation (R) of the rotating blade (14), are separated from one another in each case by a recess region (36) in which the outer edge (28) of the stationary counter-blade (16) is recessed inwards.

4. Mowing and intake device (2) according to claim 3, **characterised in that** the outer edge (28) of the stationary counter-blade (16) has an arcuate contour in the recess region (36).

5. Mowing and intake device (2) according to any of the preceding claims, **characterised in that** the cutting fingers (30) have an arcuate contour on the outwardly facing side thereof.

6. Mowing and intake device (2) according to any of the preceding claims 2 to 4, **characterised in that** the cutting edges (26) of the rotating blade (14) and of the stationary counter-blade (16) have a rectilinear course, at least in one portion.

7. Mowing and intake device (2) according to any of the preceding claims 2 to 4 or 6, **characterised in that** the cutting edges (26) of the rotating blade (14), which interact over their length (L) with an opposing cutting edge (26) of the stationary counter-blade (16) for a cut, have a shorter length (L) than the cutting edges (26) of the stationary counter-blade (16).

8. Mowing and intake device (2) according to any of the preceding claims, **characterised in that**, transversely to the axis of rotation (R) of the rotating blade (14), the stationary counter-blade (16) has a smooth surface that adjoins the cutting edges (26) on the inside and is designed as a sliding surface (38a), and the rotating blade (14) has a sliding surface (38b) that adjoins the cutting edge (26) on the inside, counter to the direction of rotation, on which surface the stalks of the chopped crops can be transported away upright by the carrier device (18), and the surfaces extend as far as a depth of the mowing rotor (6) which corresponds to at least part of the depth of the receiving pockets (22).

9. Mowing and intake device (2) according any of the preceding claims, **characterised in that** the minimum circumscribed circles (H) of adjacent mowing rotors (6) do not overlap.

10. Mowing and intake device (2) according to any of the preceding claims, **characterised in that** the rotational speed of the rotating blade (14) can be variably adjusted.

11. Mowing and intake device (2) according to any of the preceding claims, **characterised in that** the mowing rotor (6) is slidably supported on the surface of the stationary counter-blade (16) by means of an underside of the rotating blade (14); the mowing rotor (6) is non-rotatably, but longitudinally movably placed on the drive shaft (42) of the mowing rotor (6) by means of the rotor shaft (40) of said rotor; an end stop comprising a first support surface (44) that is formed thereon is connected to the drive shaft (42); a second support surface (50) that faces the first support surface (44) and is at a distance therefrom is present on the rotor shaft (40); and a spring element (48) is clamped between the mutually facing first and second support surfaces (42, 50), by means of which element the end stop and the rotor shaft (40) are interconnected.

12. Mowing and intake device (2) according to any of the preceding claims, **characterised in that** the end stop has a thrust piece (46) that is connected to the drive shaft (42) by means of a threaded joint, the threaded joint forming a stop for the thrust piece (46), by means of which joint the thrust piece (46) is held in a blocking position.

## Revendications

1. Dispositif de fauchage et de cueillage (2) pour couper et évacuer des produits récoltés à tiges, comprenant une pluralité de rotors de fauchage (6) disposés en étant répartis sur la largeur de travail du dispositif de fauchage et de cueillage (2), dans lequel chaque rotor de fauchage (6) présente un dispositif d'entraînement (18) et un dispositif de coupe muni d'une lame tournante (14) et d'une contre-lame fixe (16), et des dents d'entraînement (20) sont disposées sur le dispositif d'entraînement (18) en étant réparties sur la circonférence extérieure de celui-ci, lesdites dents réalisant entre elles des poches de réception (22) pour recevoir et évacuer les produits récoltés coupés, dans lequel les cercles inscrits extérieurs (H) de la lame tournante (14) et de la contre-lame fixe (16) présentent dans au moins une portion de transport dans la zone de coupe du rotor de fauchages (6) une distance identique par rapport à l'axe de rotation (24) du rotor de fauchage (6), **caractérisé en ce que** la lame tournante (14) est maintenue sur la surface de la contre-lame fixe (16) en étant serrée de manière coulissante dans le rotor de fauchage (6).

2. Dispositif de fauchage et de cueillage (2) selon la revendication 1, **caractérisé en ce que** la lame tournante (14) et la contre-lame fixe (16) réalisent respectivement une pluralité d'arêtes (26), dans lequel les arêtes (26) de la lame tournante (14) sur la face tournée vers l'intérieur sont réalisées par des doigts de coupe (30) de forme longitudinale et disposés en étant espacés les uns des autres sur la circonférence extérieure de la lame tournante (14), et lesdits doigts de coupe (30) sont orientés en avance du sens de rotation (R) de la lame tournante (14), les arêtes (26) de la contre-lame fixe (16) sont disposées sur la face tournée vers l'extérieur de la contre-lame fixe (16), et les arêtes (26) de la contre-lame fixe (16) dépassent vers l'extérieur dans le sens de rotation (R) de la lame tournante (14) de sorte que lors d'une rotation de la lame tournante (14), il en résulte une coupe en ciseaux entre les arêtes (26) de la lame tournante (14) et de la contre-lame fixe (16).

3. Dispositif de fauchage et de cueillage (2) selon la revendication 2, **caractérisé en ce que** les arêtes (26) de la contre-lame fixe (16) réalisent dans la zone dans laquelle elles dépassent vers l'extérieur une zone de coupe forcée (34) et **en ce que** les zones de coupe forcée (34) consécutives dans le sens de rotation (R) de la lame tournante (14) sont séparées les unes des autres respectivement par une zone de retrait (36) où le bord extérieur (28) de la contre-lame fixe (16) est en retrait vers l'intérieur.

4. Dispositif de fauchage et de cueillage (2) selon la revendication 3, **caractérisé en ce que** le bord extérieur (28) de la contre-lame fixe (16) présente un contour en forme d'arc dans la zone de retrait (36).

5. Dispositif de fauchage et de cueillage (2) selon l'une quelconque des revendications précédentes, **caractérisé en ce que** les doigts de coupe (30) présentent sur leur face tournée vers l'extérieur un contour en forme d'arc.

6. Dispositif de fauchage et de cueillage (2) selon l'une quelconque des revendications précédentes 2 à 4, **caractérisé en ce que** les arêtes (26) de la lame tournante (14) et de la contre-lame fixe (16) présentent un tracé rectiligne au moins sur un tronçon partiel.

7. Dispositif de fauchage et de cueillage (2) selon l'une quelconque des revendications précédentes 2 à 4 ou 6, **caractérisé en ce que** les arêtes (26) de la lame tournante (14) interagissant suivant leur longueur (L) avec une arête opposée (26) de la contre-lame fixe (16) en vue d'une coupe présentent une longueur (L) inférieure à celle des arêtes (26) de la contre-lame fixe (16).

8. Dispositif de fauchage et de cueillage (2) selon l'une quelconque des revendications précédentes, **caractérisé en ce que** la contre-lame fixe (16) présente transversalement au sens de rotation (R) de la lame tournante (14) une surface lisse, réalisée sous forme de surface coulissante (38a) adjacente aux arêtes (26) vers l'intérieur, et la lame tournante (14) présente une surface coulissante (38b) adjacente à l'arête (26) vers l'intérieur, à l'opposé du sens de rotation, surface à partir de laquelle les tiges des produits récoltés coupés peuvent être évacuées du dispositif d'entraînement (18) en position debout, et les surfaces atteignent une profondeur du rotor de fauchage (6) correspondant au moins à une partie de la profondeur des poches de réception (22).

9. Dispositif de fauchage et de cueillage (2) selon l'une quelconque des revendications précédentes, **caractérisé en ce que** les cercles inscrits (H) des rotors de fauchage (6) voisins ne se coupent pas.

10. Dispositif de fauchage et de cueillage (2) selon l'une quelconque des revendications précédentes, **caractérisé en ce que** la vitesse de rotation de la lame tournante (14) est réglable de manière variable.

11. Dispositif de fauchage et de cueillage (2) selon l'une quelconque des revendications précédentes, **caractérisé en ce que** le rotor de fauchage (6) est en appui coulissant par une face inférieure de la lame tournante (14) sur la surface de la contre-lame fixe (16), **en ce que** le rotor de fauchage (6) est posé par son axe de rotor (40) de manière verrouillée en rotation mais mobile dans le sens longitudinal sur l'arbre de cueillage (42) du rotor de fauchage (6), **en ce qu'**une butée avec une première surface d'appui (44) réalisée sur celle-ci est reliée à l'arbre d'entrée (42), **en ce qu'**il existe une deuxième surface d'appui (50) sur l'axe de rotor (40), tournée vers la première surface d'appui (44) et disposée à distance de celle-ci, et **en ce qu'**un élément faisant ressort (48) est monté entre les première et deuxième surfaces d'appui (42, 50) tournées l'une vers l'autre par lequel sont reliés la butée et l'axe de rotor (40).

12. Dispositif de fauchage et de cueillage (2) selon l'une quelconque des revendications précédentes, **caractérisé en ce que** la butée présente une pièce de pression (46) reliée par vissage à l'arbre d'entrée (42), le vissage formant un taquet pour la pièce de pression (46) par lequel la pièce de pression (46) est maintenue dans une position de blocage.
